# EUROPEAN PATENT APPLICATION

(11) **EP 4 726 513 A1**
(43) Date of publication of application: **15.04.2026**
(21) Application number: 24818707.2
(22) Date of filing: 05.06.2024
(51) Int. Cl.: G06F 3/0484, G06F 9/451

(54) **METHOD AND APPARATUS FOR INTERACTION, DEVICE AND STORAGE MEDIUM**

(30) Priority: 07.06.2023 CN 202310672666
(71) Applicant: Lemon Inc., Grand Cayman, KY1-1205 (KY); Beijing Zitiao Network Technology Co., Ltd., Beijing 100190 (CN)
(72) Inventor: CHEN, Jiajun, Beijing 100028 (CN); CHEN, Lang, Beijing 100028 (CN); MA, Jiaxin, Beijing 100028 (CN); HUANG, Youcai, Beijing 100028 (CN)
(74) Representative: Isarpatent
(86) International application number: PCT/CN2024/097634
(87) International publication number: WO 2024/251175

(57) **Abstract**

Embodiments of the disclosure provides a method, an apparatus, a device, and a storage medium for interaction. The method includes: presenting an input control in a first user interface; presenting, in a first user interface, a pattern received via the input control, the pattern including one or more lines; obtaining a first image based on the pattern, the first image visually at least partially matching with the pattern; presenting the first image; and presenting, in response to a predetermined condition being satisfied, at least a portion of a second image captured in real time together with at least a portion of the first image.

## Description

This application claims priority to Chinese Patent Application No. 202310672666.0, filed on June 7, 2023, entitled "METHOD, APPARATUS, DEVICE AND STORAGE MEDIUM FOR INTERACTION", the entire content of which is incorporated herein by reference.

### FIELD

Example embodiments of the disclosure generally relate to the field of computers, and in particular, to a method, an apparatus, a device, and a computer-readable storage medium for interaction.

### BACKGROUND

Nowadays, an increasing number of applications are being designed to provide various services to users. For example, a user may browse, comment, and forward various types of content in an application, including various media content such as videos, images, image sets, audio, and the like. In addition, a content sharing application also supports interaction with the user to facilitate the user to capture and share content, such as photos, videos or dynamic images. In the interaction, the user may expect to include specific elements, such as animals, scenes, items, etc., in the created content.

### SUMMARY

In a first aspect of the disclosure, a method for interaction is provided. The method includes: presenting an input control in a first user interface; presenting, in a first user interface, a pattern received via the input control, the pattern including one or more lines; obtaining a first image based on the pattern, the first image visually at least partially matching with the pattern; presenting the first image; and presenting, in response to a predetermined condition being satisfied, at least a portion of a second image captured in real time together with at least a portion of the first image.

In a second aspect of the disclosure, an apparatus for interaction is provided. The apparatus includes: a control presenting module configured to present an input control in a first user interface; a pattern presenting module configured to present, in the first user interface, a pattern received via the input control, the pattern including one or more lines; an image obtaining module configured to obtain a first image based on the pattern, the first image visually at least partially matching with the pattern; a first image presenting module configured to present the first image; and a second image presenting module configured to present, in response to a predetermined condition being satisfied, at least a portion of a second image captured in real time together with at least a portion of the first image.

In a third aspect of the disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the disclosure, a computer-readable storage medium is provided. The computer-readable storage medium has a computer program stored thereon, and the computer program is executable by a processor to implement the method of the first aspect.

It should be understood that the content described in this content section is not intended to limit the key features or major features of the embodiments of the disclosure, nor is it intended to limit the scope of the disclosure. Other features of the disclosure will become readily understood from the following description.

### BRIEF DESCRIPTION OF DRAWINGS

The above and other features, advantages, and aspects of various embodiments of the disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the disclosure may be implemented;
FIG. 2 illustrates a flowchart of a process for interaction according to some embodiments of the disclosure;
FIG. 3A illustrates a schematic diagram of a user interface for receiving user input according to some embodiments of the disclosure;
FIG. 3B illustrates a schematic diagram of a user interface presenting a prompt animation according to some embodiments of the disclosure;
FIGS. 4A-4E illustrate schematic diagrams of examples of pattern drawing according to some embodiments of the disclosure;
FIG. 4F illustrates a schematic diagram of a user interface for presenting a first image according to some embodiments of the disclosure;
FIG. 5 illustrates a schematic diagram of a user interface according to some embodiments of the disclosure;
FIGS. 6A-6C illustrate schematic diagrams of examples of replaying of a drawing process according to some embodiments of the disclosure;
FIG. 7 illustrates a flowchart of a process for generating a first image according to some embodiments of the disclosure;
FIG. 8 illustrates a schematic diagram of a framework for generating a first image according to some embodiments of the disclosure;
FIG. 9 illustrates a schematic diagram of an example label-model mapping according to some embodiments of the disclosure;
FIG. 10 illustrates a block diagram of an apparatus for interaction according to some embodiments of the disclosure; and
FIG. 11 illustrates a block diagram of a device capable of implementing various embodiments of the disclosure.

### DETAILED DESCRIPTION

It can be understood that, before the technical solutions disclosed in the embodiments of the disclosure are used, types, usage scopes, usage scenarios, and the like of personal information related to the disclosure should be notified to the user in an appropriate manner according to the relevant laws and regulations and obtain the authorization from the user.

For example, in response to receiving an active request from a user, prompt information is sent to the user to explicitly prompt the user that the requested operation will need to obtain and use the personal information of the user. Therefore, the user can autonomously select whether to provide personal information to software or hardware, such as an electronic device, an application, a server, a storage medium, or the like, executing the operation of the technical solution of the disclosure according to the prompt information.

As an optional but non-limiting implementation, in response to receiving the active request of the user, the manner of sending the prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process is merely illustrative, and does not constitute a limitation on implementations of the disclosure, and other manners of meeting related laws and regulations may also be applied to implementations of the disclosure.

It may be understood that the data involved in the technical solution (including but not limited to the data itself, the obtaining or use of the data) should follow the requirements of the corresponding laws and regulations and related provisions.

Embodiments of the disclosure will be described in more detail below with reference to the accompanying drawings. While certain embodiments of the disclosure are shown in the accompanying drawings, it should be understood that the disclosure may be implemented in various forms, and should not be construed as being limited to the embodiments set forth herein, but rather, these embodiments are provided for a more thorough and complete understanding of the disclosure. It should be understood that the drawings and embodiments of the disclosure are for illustrative purposes only and are not intended to limit the scope of the disclosure.

It should be noted that the title of any section / subsection provided herein is not limiting. Various embodiments are described throughout and any type of embodiments may be included in any section / subsection. Furthermore, the embodiments described in any section / subsection may be combined in any manner with any other embodiment described in the same section / subsection and / or different sections / subsections.

In the description of the embodiments of the disclosure, the terms "including" and the like should be understood as an open-ended inclusion, i.e., "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first", "second", and the like may refer to different or identical objects. Other explicit and implicit definitions may also be included below.

As used herein, the term "model" may learn associations between respective inputs and outputs from training data such that corresponding outputs may be generated for a given input after training is completed. The generation of the model may be based on machine learning techniques. Deep learning is a machine learning algorithm that processes inputs and provides corresponding outputs by using a multi-layer processing unit. Here, the "model" may also be referred to as a "machine learning model", "machine learning network" or "network", which terms are used interchangeably herein. A model may also include different types of processing units or networks.

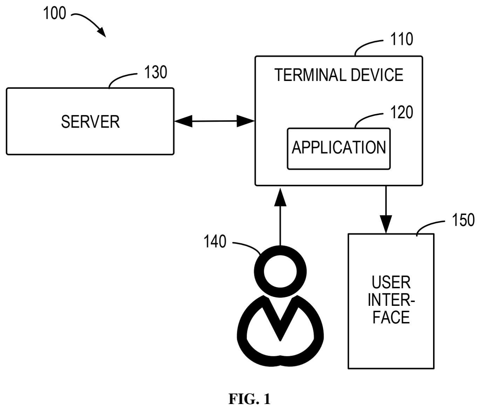

FIG. 1 illustrates a schematic diagram of an example environment 100 in which embodiments of the disclosure may be implemented. In this example environment 100, an application 120 is installed in the terminal device 110. The user 140 may interact with the application 120 via the terminal device 110 and / or an attachment device of the terminal device 110. The application 120 may be a content generation type application, a content sharing type application, or a social application capable of providing a user 140 with services related to media content, including browsing, commenting, forwarding, creating (e.g., shooting and / or editing), posting, and the like of content. As used herein, "media content" includes one or more types of content, such as video, images, dynamic images, image sets, audio, text, and the like.

In the environment 100 of FIG. 1, the terminal device 110 may present a user interface 150 of the application 120. The user interface 150 may include various interfaces that may be provided by the application 120, such as a content presentation interface, a content creation interface, a content posting interface, a message interface, a personal homepage, and the like. The application 120 may provide a content browsing function to browse various types of content posted in the application 120. The application 120 may also provide content creation functionality, including shooting, uploading, editing, and / or posting media content.

In some embodiments, the terminal device 110 communicates with a server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio / video player, a digital camera / camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a "wearable" circuit, etc.). The server 130 may be various types of computing systems / servers capable of providing computing power, including, but not limited to, a mainframe, an edge computing node, a computing device in a cloud environment, or the like.

It should be understood that the structures and functions of various elements in the environment 100 are described for illustrative purposes only and do not imply any limitation to the scope of the disclosure.

As mentioned previously, a user may expect that the created content includes a particular element, such as an animal, an item, or a scene, etc. In an interaction, in order to express the desired element, one possible solution is expressed in a natural language (e.g., a text or a speech), but some elements may be difficult to describe using a simple language. For this, the user may be supported to draw the desired elements themselves. However, different users may have different drawing levels, and the patterns drawn by the users themselves are often relatively "thin", e.g., with insufficient richness of colors and elements. On the other hand, with the development of computer technologies, machines are capable of generating various images.

To this end, embodiments of the disclosure provide an interaction solution. According to the solution, an input control is presented on a user interface and a pattern including one or more lines is received through the input control. For example, a user may hand-draw a simple sketch on the interface. An image that visually at least partially matches with the pattern is obtained and presented. For example, the image may be generated using an image generation model. In a subsequent interaction, another image captured in real time is presented with the image. Thus, the desired element may be included in the created or viewed content by the user.

According to an embodiment of the disclosure, the user only needs to simply draw a desired element through line(s) to obtain an image with similar elements but enhanced aesthetic. In this way, a richer visual effect may be provided based on a simple pattern provided by the user. This may advantageously enhance interactivity and interestingness during interaction, thereby improving the interaction experience of the user.

Some example embodiments of the disclosure will be described below with continued reference to the accompanying drawings.

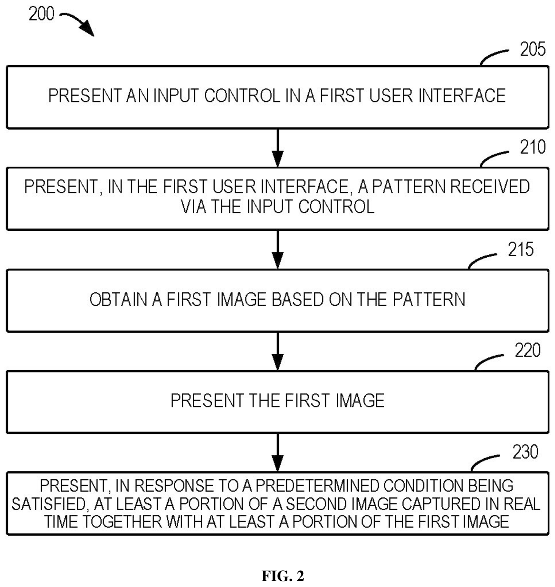

FIG. 2 illustrates a flowchart of a process 200 for interaction according to some embodiments of the disclosure. The process 200 may be implemented at a terminal device (e.g., the terminal device 110), at a server (e.g., the server 130), or partially at a terminal device, or partially at a server. For ease of discussion, the process 200 will be described with reference to the environment 100 of FIG. 1.

At block 205, an input control is presented in a first user interface. The input control is provided for the user to provide a pattern. At block 210, a pattern received via the input control is presented in the first user interface. The pattern includes one or more lines. The pattern here may be any pattern, such as a simple stroke. In the disclosure, the pattern input by the user may also be referred to as a target pattern.

Any suitable form of input control may be presented for the user 140 to provide the pattern. For example, the input control may be used to specify a pre-drawn pattern, or to draw a pattern.

In some embodiments, the input control may be an option (e.g., a button) for uploading specified content. By triggering (e.g., clicking on) the option, the user may specify a pre-drawn and stored pattern. The pre-drawn pattern may be stored in any suitable format. In particular, in some embodiments, the pattern may be pre-drawn in the form of a video or dynamic image. In this way, a drawing process of the pattern may be recorded.

Alternatively or additionally, in some embodiments, the input control may be an area in the user interface for providing a custom input. The user 140 may draw a pattern in the area with a stylus or gesture. For example, the input control may be a drawing board for pattern drawing. Accordingly, the user 140 may draw the pattern in the drawing board on the spot. The first user interface in this example is also referred to as a drawing board interface. In order to enhance the interaction effect, a current image that is currently captured may also be presented in the drawing board interface, and the current image may be captured by a camera of the terminal device 110 or a camera attached to the terminal device 110. For example, the current image may be an image of a user that is currently drawing a pattern, or an image of an environment in which the user is located. In such an embodiment, a pattern drawn by the user 140 via the drawing board may be received while presenting the current image. For example, the application 120 may determine the pattern based on strokes received in the drawing board (e.g., from a stylus or a finger).

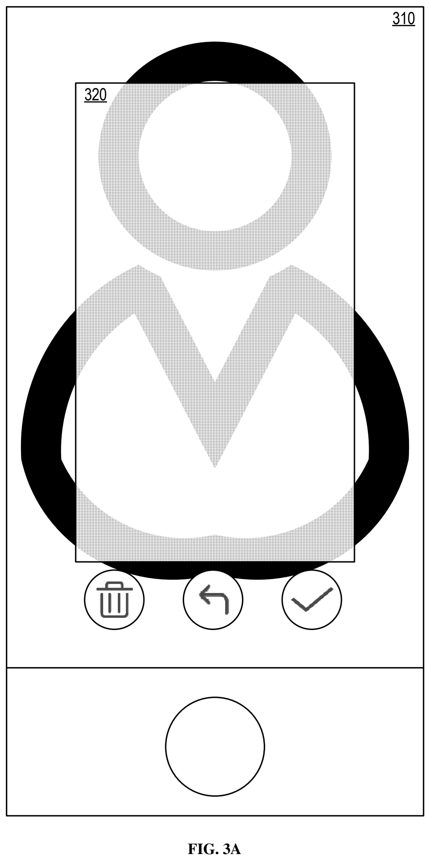

Reference is illustratively made to FIG. 3A. FIG. 3A illustrates a schematic diagram of a user interface (which is an example of a first user interface) for receiving user input according to some embodiments of the disclosure. As shown in FIG. 3A, the user interface includes an image display area 310 for presenting the current image and a drawing board 320 for pattern drawing, and the drawing board 320 is superimposed over the current image in the image display area 310. In some embodiments, to avoid blocking the current image displayed in the image display area 310 by the drawing board 320, the drawing board 320 may be at least partially transparent. For example, the drawing board 320 may have a transparency of 20%.

In some embodiments, the drawing board 320 may be provided with a default size, a default display position, and a default transparency. Alternatively or additionally, a size, a display position, and a transparency of the drawing board 320 may be set or adjusted by the user. After the adjustment is completed, the user may save the setting parameters, so that when the user interface is subsequently entered again, the application 120 may display the drawing board interface according to the parameter set or adjusted by the user. Further, in order to enhance the aesthetic appearance of the drawing board 320, and improve the user operation experience when drawing the pattern, borders, colors, or the like of the drawing board 320 may also be set. These parameters may have default settings, or the user may personalize the drawing board 320 based on their own preferences.

It should be understood that the interfaces in FIGS. 3A and other figures described below are merely example interfaces, and various interface designs may actually exist. Various graphical elements in the interface may have different arrangements and different visual representations, one or more elements of these elements may be omitted or replaced, and one or more other elements may also be present. Embodiments of the disclosure are not limited in this regard.

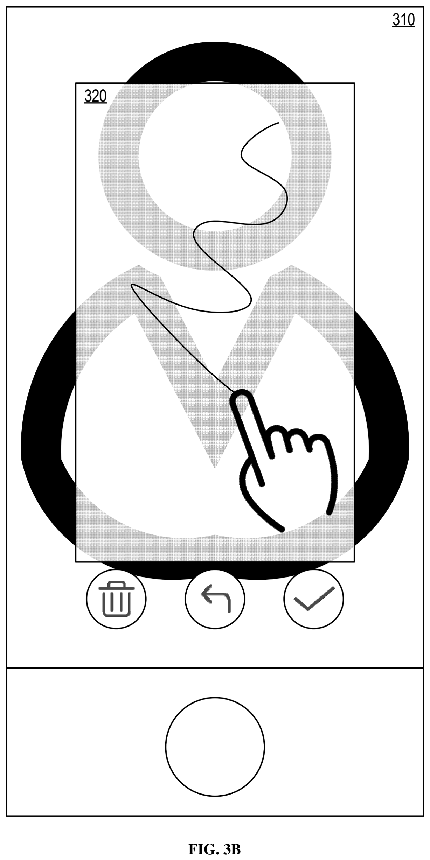

In some embodiments, in order to improve the user experience on the application, the user interaction may also be guided to facilitate the user to draw the pattern on the drawing board. For example, reference is made to FIG. 3B. As shown in FIG. 3B, a prompt animation may be played on the drawing board 320 to indicate to the user that the drawing board is configured for pattern drawing while the current image is presented in the image display area 310. The prompt animation herein may be in any form, for example, a video or a dynamic image, which is not limited in the disclosure. In some embodiments, it may also indicate to the user that the drawing board is configured for pattern drawing by one or more of a plurality of manners such as playing a prompt audio, presenting a prompt text, or the like. In some embodiments, the application 120 may also present prompt information at a plurality of controls in the user interface to indicate a function of a respective of the plurality of controls to the user.

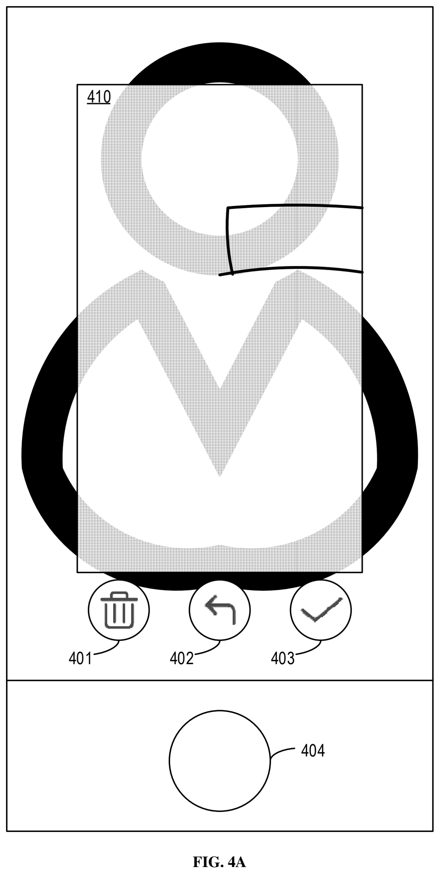

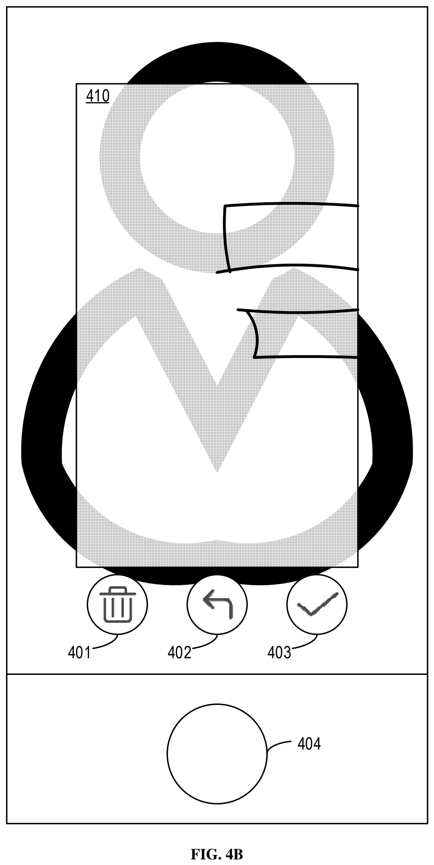

As mentioned above, in such embodiments, the pattern drawn by the user via the drawing board may be received while presenting the current image. That is, the application 120 may receive user input indicating a drawing process of the pattern. The drawing and presenting of the pattern will be discussed below with reference to FIGS. 4A-4D. As shown in FIG. 4A, a user-drawn pattern may be received in the drawing board 410 of the user interface. The pattern input by the user may be determined based on a touch operation of the user received in the drawing board 410, and presented on the drawing board 410. In FIG. 4A, the user draws three lines. Then, the user continues to draw, and the drawn pattern is shown in FIG. 4B.

In some embodiments, the drawing board interface may further include a control for processing the pattern, such as a deletion control for deleting the drawn pattern, an undo control for undoing the previously drawn line, and a confirmation control for confirming the currently drawn pattern. These controls may be presented at any suitable position in the user interface. The application 120 may accordingly process the pattern displayed in the drawing board 410 in response to receiving a trigger operation on the specific control. For example, as shown in FIG. 4A, the drawing board interface may further include a deletion control 401, an undo control 402, and a confirmation control 403. The application 120 may delete the currently presented pattern in the drawing board 410 in response to receiving a touch operation on the deletion control 401.

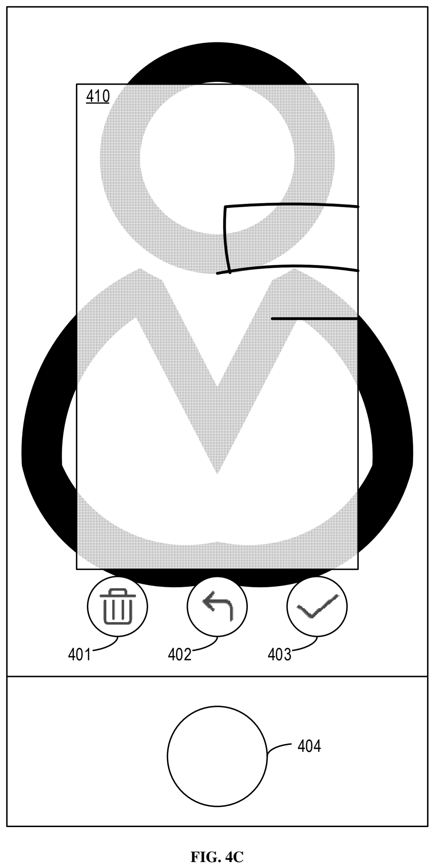

In some embodiments, in response to receiving a trigger operation on the undo control 402, the most recently drawn line may be undone on the basis of the currently presented pattern. Continuous multiple undoes may be supported. For example, the application 120 may implement undo of the line by capturing frames. During the drawing, a capture frame may be triggered at the end of each stroke, and the current frame is stored and presented in the drawing board. If it is detected that the undo control 402 is triggered, a frame corresponding to the currently displayed pattern is cleared, and the stored previous frame is displayed. In some embodiments, a number of consecutive undo operations may also be limited, that is, a number of stored frames is limited. For example, at most 10 consecutive captured frame images may be stored, that is, at most 10 consecutive times of undo operations may be supported. Referring to FIGS. 4B and 4C, if the user continuously triggers the undo control twice on the basis of an intermediate pattern presented in FIG. 4B, the intermediate pattern shown in FIG. 4C is presented on the drawing board 410.

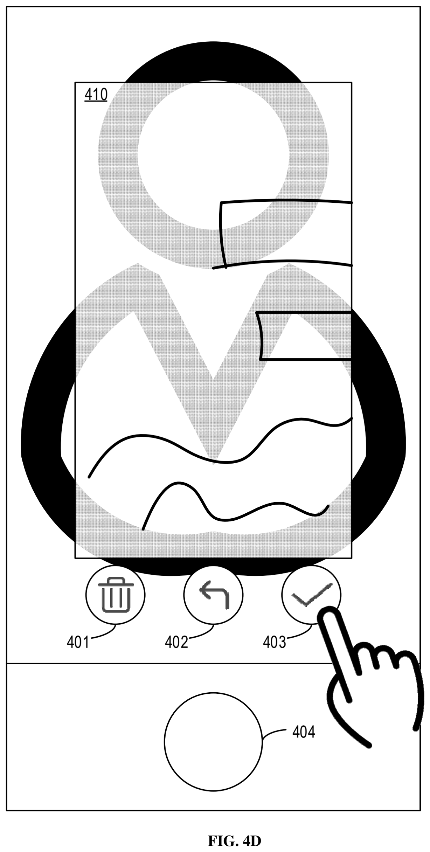

As shown in FIG. 4D, a pattern drawn by the user may be received based on the drawing board 410. In some embodiments, in response to receiving a trigger operation on the confirmation control 403, it may be determined that the drawing is completed, thereby triggering the execution of subsequent processing. In some embodiments, if a predetermined duration has elapsed without receiving any operation of the user on the pattern displayed in the drawing board 410 (e.g., a trigger operation on the control) or without any user input, a completion of the drawing may be automatically determined, thereby triggering the execution of the subsequent processing.

With continued reference to FIG. 2, at block 215, a first image is obtained based on the pattern. The first image is visually at least partially matched with the pattern. After the pattern is received, the first image is determined based on the pattern. The first image may be determined by the terminal device 110 based on the pattern, or may be determined by the server 130 to which the pattern is provided by the terminal device 110. The first image visually at least partially matching with the pattern refers to that the first image includes an element that is visually the same or similar to a body of the pattern (or the entire pattern), e.g., the element and the body of the pattern may have similar shapes, contours, or trajectories. But the element may differ from the body of the pattern in size, color, etc. For example, if the body of the pattern is a cactus represented by a line, the first image may include a cactus with a size, color, etc. that is different from that of the pattern.

The first image may be various types of images, such as an image captured with a camera or an image generated using a machine learning model. The first image may be obtained in various suitable manners. In some embodiments, the first image may be selected from an image set. For example, the image set may include an image generated in advance by using a machine learning model and / or an image captured by a collecting device such as a camera. These images may include various types of elements, such as various animals, various plants, various scenes, various items, and the like. After the pattern is obtained, an image visually matched with the pattern may be determined from the image set, and the image will be determined as the first image. For example, visual features of the pattern and visual features of each image in the image set may be extracted with various suitable feature extraction models. An image that is most visually similar to the pattern may be determined as the first image.

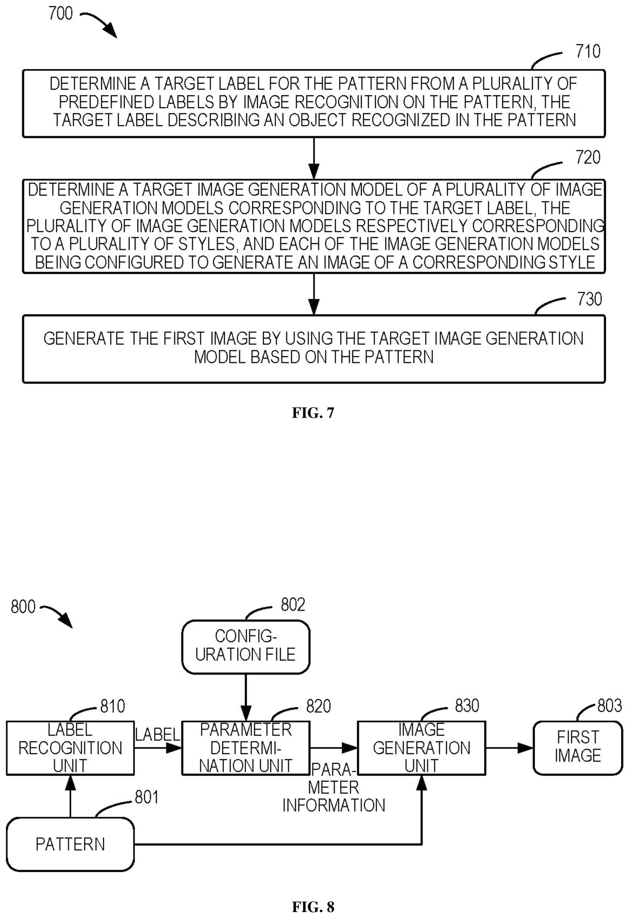

In some embodiments, the first image may be generated using the machine learning model (also referred to as an image generation model) based on the pattern. Specifically, the pattern may be provided to a model, which may generate the first image corresponding to the pattern based on the pattern. In such an embodiment, the first image may also be referred to as a machine-generated image. The machine-generated images may have visual elements that are not present or difficult to capture in the real world as compared to camera captured images, resulting in richer multivariate visual effects. This may bring a more interesting visual experience to the user. Such embodiments will be described in detail below with reference to FIGS. 7-9.

At block 220, the first image is presented. For example, the obtained first image may be presented in a user interface of the application 120. In some embodiments, other content may be presented with the first image. For example, the target pattern may be presented with the first image. The focus of the interaction is to display the obtained first image to the user. For this reason, the display of the first image is more important compared to the pattern. In view of this, in some embodiments, the target pattern may be superimposed over the first image. The target pattern may be superimposed at any location of the first image. The target pattern superimposed over the first image may have a size smaller than the first image. For example, a ratio of a size of the target pattern to a size of the first image may be less than a threshold. Alternatively or additionally, the target pattern superimposed over the first image may be at least partially transparent. In some embodiments, a size, a position, a transparency, or the like for presenting the target pattern may be adjusted based on the setting operation of the user.

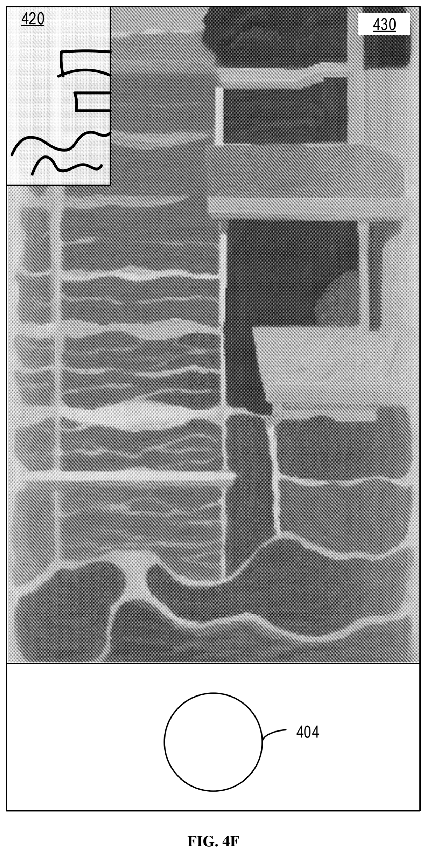

FIG. 4F illustrates a schematic diagram of a user interface for presenting a first image according to some embodiments of the disclosure. As shown in FIG. 4F, in the user interface, a pattern 420 and a first image 430 that visually match the pattern are presented. The pattern 420 is superimposed over the first image 430, and a size of the pattern 420 is much smaller than a size of the first image 430. In this example, the pattern 420 has a certain degree of transparency. The pattern 420 may be superimposed at any position of the first image 430, e.g., superimposed on the upper left corner of the first image 430.

It can be seen from this example that the original "thin" stroke input by the user is given richer elements, which improves the visual effect. In addition, in this way, the machine-generated image and the original pattern are simultaneously presented. On the one hand, the user can intuitively feel the degree of similarity between the machine-generated image and the pattern, and on the other hand, the machine-generated image can be more highlighted.

Regarding the presentation mode of the first image, in some embodiments, the first image may be presented by using a transition effect to highlight the first image. For example, before the first image is obtained, the target pattern is taken as an attention focus of the first user interface. In the disclosure, a user interface with an element as an attention focus may refer to highlighting the element in the user interface in any suitable manner, so that the viewer focuses on the element while seeing the user interface. For example, the element may occupy a larger area in the user interface. As another example, the element may have a brighter color than other elements in the user interface. As another example, an outline or edge of the element may be highlighted. After the first image is obtained, the first user interface with the target pattern as an attention focus is switched to a second user interface with the first image as an attention focus. That is, a transition from the target pattern to the first image is achieved.

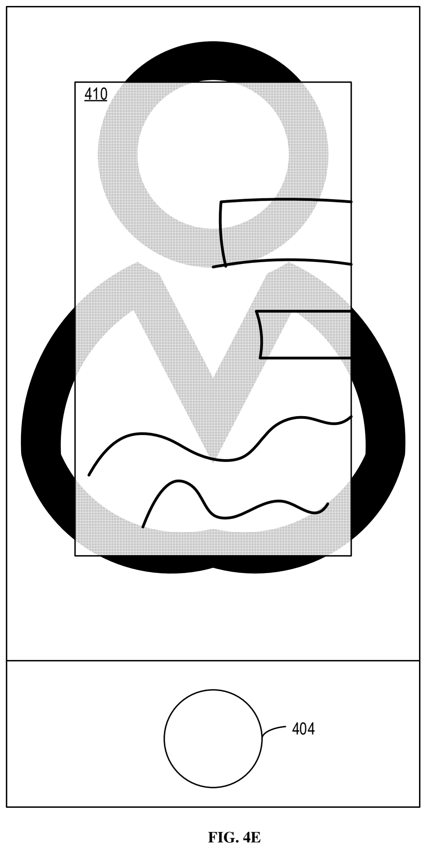

Continuing the example of FIG. 4D, in response to the user clicking on the confirmation control 403, it may be determined that the pattern drawing is completed. Accordingly, the pattern is configured to obtain the first image, and the presentation of the deletion control 401, the undo control 402, and the confirmation control 403 are ceased to indicate that the pattern drawing is completed, such as shown in FIG. 4E. The user interface containing the drawing board 410 shown in FIG. 4E may be regarded as the first user interface with the target pattern as an attention focus. In addition, indication information that the first image is being obtained may also be presented in a user interface such as shown in FIG. 4E. For example, the edges of the drawing board 410 may blink, flow in a certain direction, etc. After the first image 430 is obtained, a user interface shown in FIG. 4F is switched from the user interface in FIG. 4E. The user interface may be regarded as a second user interface with the first image 430 as an attention focus.

This transition effect switching from one user interface to another may be implemented in any suitable transition way. As an example, displaying of the first user interface with the target pattern as the attention focus may be ceased, and the second user interface with the first image as the attention focus may be displayed. As another example, the manner of switching the first user interface to the second user interface may be a rotary switching that may represented as the first user interface rotating at a speed to present the second user interface. As still another example, the manner of switching the first user interface to the second user interface may be a coverage type switching, that is, the second user interface may gradually cover the first user interface. As yet another example, a wipe type transition may be used, such as the first user interface being gradually wiped, a wiped portion presenting a second user interface, etc. The above description of the switching manner is merely illustrative and is not intended to limit the scope of the disclosure. In an embodiment of the disclosure, the switching of the first user interface and the second user interface may be implemented in any suitable manner. In some embodiments, a specific transition mode may be determined based on the setting of the user. This enriches the image switching of the interaction process, thereby increasing the interestingness of the interaction.

With continued reference to FIG. 2, at block 230, in response to a predetermined condition being satisfied, at least a portion of a second image captured in real time is presented with at least a portion of the first image. The second image may be a real-time image captured by an image collecting component (e.g., a camera) of the terminal device 110 or an image collecting component attached to the terminal device 110. For example, the second image may be a real-time image (including a user) captured by a front camera of the terminal device 110. For another example, the second image may be a real-time image of an environment in which the user captured by the rear camera of the terminal device 110 is located.

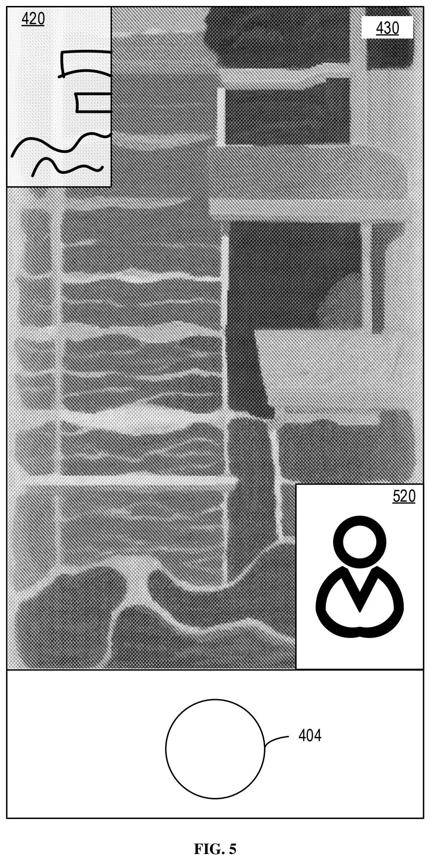

The predetermined condition may be any suitable condition. In some embodiments, the predetermined condition may include obtaining of the first image. That is, after the first image is obtained, the first image may be presented in the user interface together with the second image captured in real time. In some embodiments, the predetermined condition may be related to a predetermined duration. For example, the obtained first image may be presented first, and the second image captured in real time may be presented together after the predetermined duration. For example, after the first image is obtained, the user interface shown in FIG. 4F is first presented, in which the first image is displayed. After the predetermined duration, the user interface shown in FIG. 5 is presented, in which the second image 520 captured in real time is displayed, and in this example, the second image is the captured user image. In some embodiments, the predetermined condition may include triggering of the predetermined control by the user. For example, the predetermined control may be a control dedicated to presenting the first image and the second image together, or may be a trigger control for content capture. In some embodiments, the predetermined condition may include an end of replaying of the drawing process of the pattern. Such embodiments will be described below.

Although the second image 520 is shown as being superimposed over the first image 430, this is merely illustrative and not intended to be limiting. In an embodiment of the disclosure, the position, size, transparency, and the like of the presented second image with respect to the presented first image are not limited.

In embodiments of the disclosure, at least a portion of the first image and at least a portion of the second image may be presented together in any suitable manner. In some embodiments, the first image may be used as a background or foreground for the second image. In some embodiments, the second image may be used as a background or foreground for the first image. In some embodiments, at least a portion of the second image may be superimposed over the first image, such as shown in FIG. 5, or at least a portion of the first image may be superimposed over the second image. In some embodiments, the first image and the second image may be presented together in an equal relationship. For example, the first image and the second image may be displayed in a split screen.

In some embodiments, the media content may also be generated based on the first image and the second image in response to a trigger operation for the content capture. For example, the generated media content may be considered a special effect. The generated media content may be a still image or a dynamic video, and then the user may post the generated media content. As an example, a shooting control, such as a shooting control 404, may be presented in the user interface. If the user triggers the shooting control, the interaction process of the user may start to be recorded, and corresponding media content, such as video, may be generated.

In some embodiments, the trigger operation for content capture may occur before the first image is obtained. For example, the user triggers content capture (e.g., clicks on the shooting control 404) and invokes an entry, such as the drawing board 320, for providing the pattern, thereby beginning to the pattern. In such embodiments, the recording begins with the drawing of the pattern and the media content is generated. That is, the media content herein may include a drawing process of the pattern as shown in FIGS. 4A-4D, a transition from FIG. 4D to presenting the user interface shown in FIG. 4F, and a process of FIGS. 4F-5, and a subsequent shooting after FIG. 5.

In some embodiments, the trigger operation for content capture may occur after the first image is obtained. For example, the user may trigger the shooting control 404 in the user interface shown in FIG. 4F or FIG. 5. In response thereto, the terminal device 110 may begin recording subsequent interactions of the user, and accordingly generate media content, such as video. In this case, the drawing process of the target pattern may also be presented. If the pattern is drawn by the user via an input control, coordinate data corresponding to each frame pattern in the drawing process of the pattern may be stored in an array. In the replaying process, coordinate data corresponding to each frame pattern may be extracted from the array and a pattern may be drawn based on the coordinate data to replay the drawing process. In this way, a speed of replaying may be controlled. If the user inputs a video or dynamic image of the pattern drawing process, the video or dynamic image may be played.

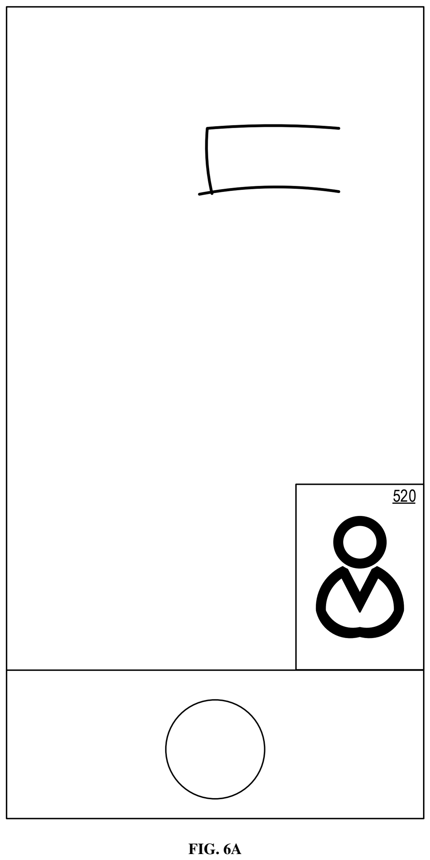

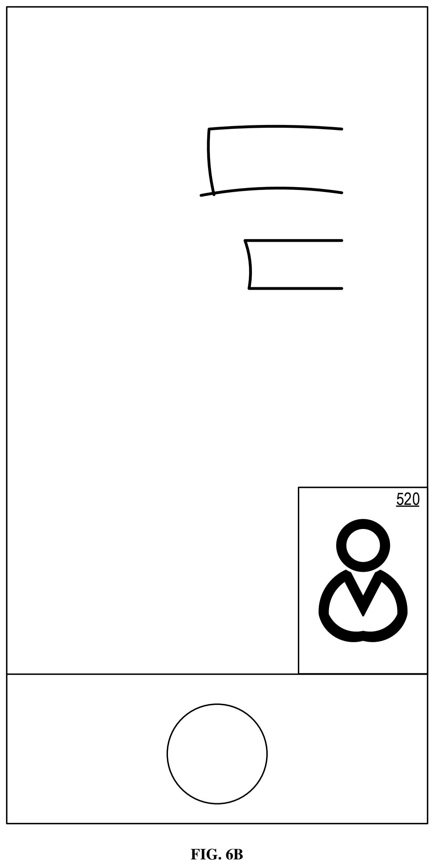

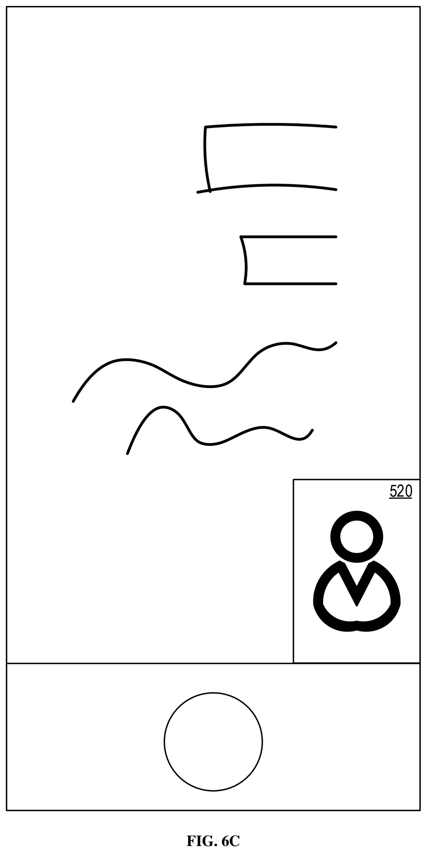

In the embodiments mentioned above in which the trigger operation for content capture occurs after the first image is obtained, replaying of the drawing process may be in response to a trigger operation for content capture being detected. FIGS. 6A-6C illustrate the replay of the pattern drawing shown in FIGS. 4A-4D. In response to receiving the trigger operation on the shooting control 404 as shown in FIG. 4F or FIG. 5, the pattern replaying as shown in FIGS. 6A-6C may be generated and presented based on pre-stored coordinate data. In this example, replaying of the target pattern is an attention focus of the user interface. Further, at least a portion of the second image may be presented with at least a portion of the first image after replaying is finished, for example, switching from the user interface shown in FIG. 6C to the user interface shown in FIG. 5. In such an embodiment, after recording of the media content is started, the drawing of the pattern is re-displayed, and the subsequent interaction continues to be recorded. This enables the generated media content to record the drawing process of the pattern, ensuring the continuity and integrity of the interaction.

For the foregoing embodiments in which the trigger operation for content capture occurs before the first image is obtained, replaying of the pattern drawing process may also be performed. As an example, the drawing process of the pattern may be replayed in the user interface shown in FIG. 5. For example, the drawing process of the pattern may be replayed first at the upper left corner position of the user interface, followed by presenting the pattern 420.

An example process of interaction is described above. As mentioned above, in some embodiments, the first image may be generated using an image generation model. The generation of the first image will be discussed below with reference to FIGS. 7-9.

FIG. 7 illustrates a flowchart of a process 700 for generating a first image according to some embodiments of the disclosure. The process 700 may be implemented partially at a terminal device (e.g., implemented at the terminal device 110), partially at a server (e.g., implemented at the server 130). For ease of discussion, the process 700 will be described with reference to the environment 100 of FIG. 1.

At block 710, a target label for the pattern is determined from a plurality of predefined labels by image recognition on the pattern. The target label describes an object recognized in the pattern. For example, the body of the pattern may be recognized and the recognized subject may be classified. The target label may be regarded as a classification of the pattern.

After the pattern is obtained, any suitable image recognition algorithm or image classification algorithm may be used to perform image recognition on the pattern to determine the label for the pattern. For example, if the user inputs a simple stroke that is a cactus, the generated label may be cactus, green, plant, barbed plant, desert, potted cactus, green plant, or the like. In some embodiments, the label obtained by the image recognition algorithm or the image classification algorithm may be directly used as the target label for subsequent processing. In some embodiments, the label may be regarded as an initial label, which will be used as a basis for determining a target label from predefined labels. The predefined label may be a pre-stored label that may be recognized by the machine learning model.

The target label may be a label of the predefined labels that is semantically matched with the initial label. For example, if the initial label is "Car A", a label "Car B" in the predefined labels may be used as the determined target label since the initial label "Car A" and the target label "Car B" have a matching semantic meaning of "car". Alternatively or additionally, the target label may be a label from the predefined labels that visually matches an object described and the object expressed by the initial label. For example, if the initial label is a "passport," the label "book" in the predefined label may serve as the target label that is determined because a shape of the "passport" visually matches that of the book.

Determining the target label from the predefined labels may performed in any suitable manner. For example, mapping of various possible labels to predefined labels may be preset according to semantic matching and / or visual matching. The predefined label corresponding to the initial label may be determined as the target label based on the mapping. As another example, a model that maps various labels to predefined labels may be pre-trained. Embodiments of the disclosure are not limited in this regard.

One example is described with reference to FIG. 8. FIG. 8 illustrates a schematic diagram of a frame 800 for generating a first image according to some embodiments of the disclosure. As shown in FIG. 8, the pattern 801 may be provided to a label recognition unit 810, and the label recognition unit 810 may perform image recognition on the pattern 801 to determine an initial label corresponding to the pattern. The initial label is provided to a parameter determination unit 820, which may obtain a mapping between various initial labels and predefined labels from a configuration file 802. Correspondingly, the parameter determination unit 820 may determine a target label corresponding to the initial label from the plurality of predefined labels.

With continued reference to FIG. 7, at block 720, a target image generation model of a plurality of image generation models corresponding to the target label is determined. The plurality of image generation models corresponds to a plurality of styles, respectively, and each image generation model is configured to generate an image of a corresponding style. Examples of image styles include, but are not limited to, watercolor, crayon, sketch, comic, and the like. The step at block 720 may be performed, for example, by the parameter determination unit 820.

In some embodiments, a label style mapping between a plurality of predefined labels and a plurality of styles may be obtained. For example, the parameter determination unit 820 may obtain the label style mapping from the configuration file 802. The label style mapping herein includes respective entries for the plurality of predefined labels, and each entry indicates a candidate style of the plurality of styles corresponding to a respective predefined label. At least one style corresponding to the target label may be determined from the plurality of styles based on the label style mapping. Further, at least one candidate image generation model corresponding to the at least one style is determined from the plurality of image generation models based on a corresponding relationship between the style and the model.

In some embodiments, in order to determine the candidate image generation model more intuitively based on the target label, a label-model mapping between the plurality of predefined labels and the plurality of image generation models may be obtained. For example, the parameter determination unit 820 may obtain the label-model mapping from the configuration file 802. The label-model mapping herein includes respective entries for the plurality of predefined labels, and each entry indicates a candidate image generation model of the plurality of image generation models corresponding to a respective predefined label. Further, at least one candidate image generation model corresponding to the target label may be determined based on an entry for the target label in the label-model mapping. Such label-model mapping may be predetermined. For example, a model identified as a candidate image generation model has a better effect on the predefined label than a model that is not identified as a candidate image generation model.

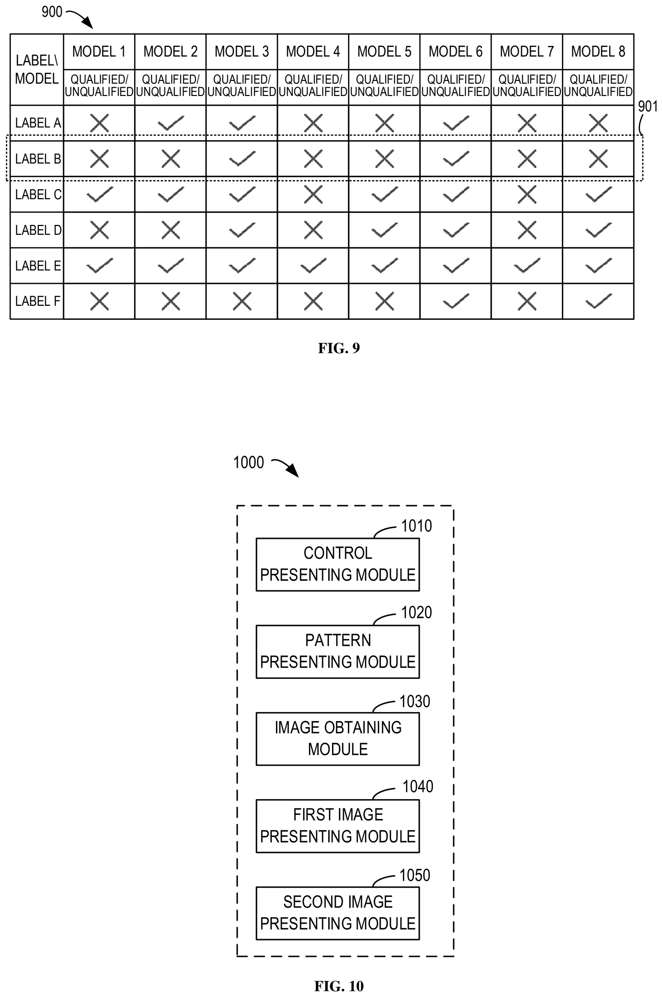

FIG. 9 illustrates a schematic diagram of a label-model mapping 900 according to some embodiments of the disclosure. As shown in FIG. 9, each row in the model label mapping corresponds to one label, and each column corresponds to one image generation model. That is, each row corresponds to one entry, such as an entry 901 shown in FIG. 9. Taking the target label as a label B as an example, the entry 901 is an entry for the label B in the label-model mapping 900. Based on the entry 901, it may be determined that generation effects of a model 3 and a model 6 for the label B is qualified, or it may be understood that the image generation effects of the model 3 and the model 6 for the label B exceed a threshold effect. Therefore, the model 3 and the model 6 may be determined as two candidate image generation models corresponding to the label B.

It can be understood that a number of types of image styles is generally less than a number of labels. In this case, one image generation model and / or style may be used as candidates for multiple different labels. For example, in the example of FIG. 9, a model 5 is a candidate model for labels C, D, E.

After the at least one candidate image generation model is determined, a target image generation model may be determined from the at least one candidate image generation model. It can be understood that, when only one candidate image generation model is included, the candidate image generation model is directly determined as the target image generation model. In the case of including the plurality of candidate image generation models, in some embodiments, the target generation model may be determined from the at least one candidate image generation model in a random determination manner.

In some embodiments, the target image generation model may also be determined by taking turns. For example, for the label B, if the model 3 is used upon the previous generation of the image for the label B, the model 6 may be determined as the target image generation model.

In some embodiments, the target image generation model may also be determined in response to user selection. For example, when the candidate image generation model includes the model 3 and the model 6, both the model 3 and the model 6 may be presented to the user (for example, model names and model identifiers of the model 3 and the model 6 are presented through the user interface), and the model selected by the user is determined as the target image generation model.

In some embodiments, priorities of the plurality of image generation models for different labels may also be predetermined, and based on the priority of the at least one candidate image generation model for the target label, the candidate image generation model with a higher priority is determined as the target image generation model. The priority herein may be associated with an image generation effect for the label. The priority herein may be predetermined by the user, or may be determined by itself based on a historical situation.

With continued reference to FIG. 7, at block 730, the first image is generated using the target image generation model based on the pattern. For example, the parameter determination unit 820 may provide the target image and the identifier of the target image generation model to an image generation unit 830. The image generation unit 830 may deploy or be able to access each image generation model, and provide the target pattern to the target image generation model. Correspondingly, the target image generation model may generate the first image.

The image generation model may have default parameter information, and may generate the first image according to the obtained target pattern based on its own default parameter information.

In some embodiments, in order to ensure the generation effect of the first image, some labels may have their customized parameter information. In the case of such customized parameter information, the image generation model may have a better generation effect. If the target label is the label with the customized parameter information, the target parameter information for the target label may also be obtained, and the target parameter information will be provided to the target image generation model together with the pattern. The target parameter information herein is different from the default parameter information of the target image generation model. For example, the parameter determination unit 820 may obtain the target parameter information from the configuration file 802, and provide the target parameter information to the image generation unit 830 with the target pattern.

The target parameter information may include a prompt corresponding to the target label, for example, content expected to be generated. As an example, if the target label is "cactus", the prompt may include a text "cactus" or a text "plant". The target parameter information may further include an identifier of the target image generation model, for example, an index or a corresponding style thereof.

In some embodiments, the target parameter information may include a text corresponding to the target label for assisting image generation, also referred to as an auxiliary text. For example, the auxiliary text may be used to describe a text where the object in the pattern is located. Taking the cactus as an example in the pattern, the auxiliary text may include, for example, "desert". Taking the pattern including a dolphin as an example, the auxiliary text may include, for example, "sea".

Alternatively or additionally, in some embodiments, the target parameter information may include content that is prohibited from being generated by the target image generation model. Taking the pattern including the dolphin as an example, the content that is prohibited from being generated by the target image generation model may be, for example, a human face or the like.

Alternatively or additionally, in some embodiments, the target parameter information may include an intensity of a generated image stylized according to a style corresponding to the target image generation model. It can be understood that the higher the intensity, the more the generated image conforms to the style corresponding to the target image generation model. For example, if the corresponding style is "comic", the higher the intensity, the stronger the comic feeling of the generated image.

Alternatively or additionally, in some embodiments, the target parameter information may include a degree of influence of the pattern on the first image during the image generation. The degree of influence herein may be understood as a similarity between the generated image and the pattern in terms of shape, size, contour, and the like. For example, the pattern includes a cactus, and in a case where the influence degree is relatively large, the cactus in the generated image has a higher similarity to the cactus indicated by the pattern in terms of shape, contour, size and the like.

Alternatively or additionally, in some embodiments, the target parameter information may include a number of times a noise image is sampled during the image generation. For example, the target image generation model may first generate a noise image, and then generate the first image by sampling the noise image. The target parameter information may include a number of times of sampling. In a case that the target image generation model is a diffusion model, the number of times herein may also be a number of diffusion steps in the diffusion model.

Alternatively or additionally, in some embodiments, the target parameter information may include a sampler applied to the noise image during image generation. For example, the target image generation model (for example, a diffusion-based model) may first generate a noise image, and then perform noise reduction on the noise image by using the sampler to generate the first image. Different samplers have different capabilities, and the selection of the sampler will affect the generation effect for generating the first image by the target image generation model.

One example process is described with reference to FIG. 8. As shown in FIG. 8, the parameter determination unit 820 may determine, based on the determined target label, at least one candidate image generation model from the plurality of image generation models according to the label-model mapping in the configuration file 802, to determine the target image generation model therefrom. The parameter determination unit 820 may also obtain from the configuration file 802 target parameter information for the target image generation model, the target parameter information is predetermined for the target label. The parameter determination unit 820 provides the determined target parameter information to the image generation unit 830. The image generation unit 830 includes a plurality of image generation models, and the image generation unit 830 may generate the first image 803 based on the pattern 801 and the parameter information provided by the parameter determination unit by using the target image generation model determined by the parameter determination unit 820. Thus, the matched image generation model may be determined based on the label corresponding to the pattern, and then the first image with better generation effect is obtained.

In summary, according to the solution, an input control is presented on the user interface, and a pattern including one or more lines is received through the input control. An image that visually at least partially matches with the pattern is obtained and presented. In a subsequent interaction, another image captured in real time is presented with the image. Thus, the user only needs to simply draw the desired element through the line to obtain an image with similar elements but enhanced aesthetic. In this way, a richer visual effect may be provided when the user gives a simple pattern. This may advantageously enhance the interactivity and interestingness during interaction, thereby improving the user interaction experience.

FIG. 10 is a schematic structural block diagram of an apparatus 1000 for interaction according to some embodiments of the disclosure. The apparatus 1000 may be implemented or included in the terminal device 110 and / or the server 130. Various modules / components in the apparatus 1000 may be implemented by hardware, software, firmware, or any combination thereof.

As shown, the apparatus 1000 includes a control presenting module 1010 configured to present an input control in a first user interface. The apparatus 1000 further includes a pattern presenting module 1020 configured to present, in the first user interface, a pattern received via the input control, and the pattern includes one or more lines. The apparatus 1000 further includes an image obtaining module 1030 configured to obtain a first image based on the pattern, and the first image visually at least partially matches with the pattern. The apparatus 1000 further includes a first image presenting module 1040 configured to present the first image. The apparatus 1000 further includes a second image presenting module 1050 configured to present, in response to a predetermined condition being satisfied, at least a portion of a second image captured in real time together with at least a portion of the first image.

In some embodiments, the apparatus 1000 further includes a replaying module configured to replay a drawing process of the pattern.

In some embodiments, the drawing process is replayed in response to a trigger operation for content capture being detected after obtaining the first image, and at least a portion of the second image is presented with at least a portion of the first image in response to an end of the replay.

In some embodiments, the input control includes a drawing board for pattern drawing, and the first user interface further presents a current image that is currently captured. The apparatus 1000 further includes: a drawing board presenting module configured to present the drawing board for pattern drawing and the current image that is currently captured; and a pattern receiving module configured to receive the pattern drawn by a user via the drawing board while presenting the current image.

In some embodiments, the drawing board is at least partially transparent and is superimposed over the current image.

In some embodiments, the apparatus 1000 further includes: a prompt animation playback module configured to play a prompt animation on the drawing board to indicate to the user that the drawing board is configured for pattern drawing.

In some embodiments, the apparatus 1000 further includes: a media content generation module configured to generate, in response to a trigger operation for content capture, media content based on the first image and the second image.

In some embodiments, the apparatus 1000 further includes a pattern presenting module configured to present the pattern with the first image, and the pattern is superimposed over the first image and has a size smaller than that of the first image.

In some embodiments, the first image presenting module 1020 includes: an interface switching module configured to switch, in response to obtaining the first image, from the first user interface with the pattern as an attention focus to a second user interface with the first image as an attention focus.

In some embodiments, the first image is generated using an image generation model.

In some embodiments, the apparatus 1000 further includes: a label determining module configured to determine a target label for the pattern from a plurality of predefined labels by image recognition on the pattern, the target label describing the object recognized in the pattern; a model determining module configured to determine a target image generation model of a plurality of image generation models corresponding to the target label, the plurality of image generation models respectively corresponding to a plurality of styles, and each of the image generation models being configured to generate an image of a corresponding style; and a first image generation module configured to generate the first image by using the target image generation model based on the pattern.

In some embodiments, the model determining module includes: a model mapping obtaining module configured to obtain a label-model mapping between the plurality of predefined labels and the plurality of image generation models, the label-model mapping including respective entries for the plurality of predefined labels, and each entry indicating a candidate image generation model of the plurality of image generation models corresponding to a respective predefined label; a candidate model determining module configured to determine at least one candidate image generation model corresponding to the target label based on an entry for the target label in the label-model mapping; and a target model determining module configured to determine the target image generation model from the at least one candidate image generation model.

In some embodiments, the first image generation module includes: a parameter information obtaining module configured to obtain target parameter information for the target image generation model predetermined for the target label, the target parameter information being different from default parameter information of the target image generation model; a providing module configured to provide the pattern and the target parameter information to the target image generation model; and a first image obtaining module configured to obtain the first image from the target image generation model.

In some embodiments, the target parameter information includes at least one of: a text corresponding to the target label for assisting image generation, content that is prohibited from being generated by the target image generation model, an intensity of a generated image stylized according to a style corresponding to the target image generation model, a degree of influence of the pattern on the first image during the image generation, a number of times a noise image is sampled during the image generation, or a sampler applied to the noise image during image generation.

In some embodiments, the label determining module includes: an initial label generation module configured to generate an initial label describing the object by image recognition on the pattern; and a target label determining module configured to determine the target label from the plurality of predefined labels based on the initial label, the target label being semantically matched with the initial label, or the object described by the target label being visually matched with an object described by the initial label.

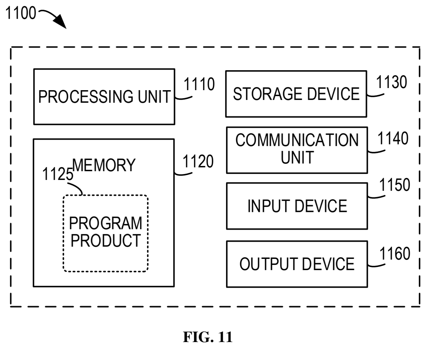

FIG. 11 illustrates a block diagram illustrating an electronic device 1100 in which one or more embodiments of the disclosure may be implemented. It should be understood that the electronic device 1100 illustrated in FIG. 11 is merely illustrative and should not constitute any limitation on the functionality and scope of the embodiments described herein. The electronic device 1100 shown in FIG. 11 may be configured to implement the terminal device 110 and / or the server 130 in FIG. 1.

As shown in FIG. 11, the electronic device 1100 is in the form of a general-purpose electronic device. Components of the electronic device 1100 may include, but are not limited to, one or more processors or processing units 1110, a memory 1120, a storage device 1130, one or more communication units 1140, one or more input devices 1150, and one or more output devices 1160. The processing unit 1110 may be an actual or virtual processor and capable of performing various processes according to programs stored in the memory 1120. In a multiprocessor system, a plurality of processing units executes computer-executable instructions in parallel to improve the parallel processing capability of the electronic device 1100.

The electronic device 1100 generally includes a plurality of computer storage media. Such media may be any available media that is accessible by the electronic device 1100, including, but not limited to, volatile and non-volatile media, removable and non-removable media. The memory 1120 may be a volatile memory (e.g., a register, a cache, a random access memory (RAM)), a non-volatile memory (e.g., a read-only memory (ROM), an electrically erasable programmable read-only memory (EEPROM), a flash memory), or some combination thereof. The storage device 1130 may be a removable or non-removable medium and may include a machine-readable medium, such as a flash drive, magnetic disk, or any other medium, which may be capable of storing information and / or data and may be accessed within the electronic device 1100.

The electronic device 1100 may further include additional removable / non-removable, volatile / non-volatile storage media. Although not shown in FIG. 11, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 1120 may include a computer program product 1125 having one or more program modules configured to perform various methods or actions of various embodiments of the disclosure.

The communication unit 1140 is configured to communicate with another electronic device through a communication medium. Additionally, the functionality of components of the electronic device 1100 may be implemented in a single computing cluster or multiple computing machines capable of communicating through a communication connection. Thus, the electronic device 1100 may operate in a networked environment using logical connections with one or more other servers, a network personal computer (PC), or another network node.

The input device 1150 may be one or more input devices, such as a mouse, a keyboard, a trackball, or the like. The output device 1160 may be one or more output devices, such as a display, a speaker, a printer, or the like. The electronic device 1100 may also communicate with one or more external devices (not shown) through the communication unit 1140 as needed, the external device such as a storage device, a display device, etc., communicates with one or more devices that enable the user to interact with the electronic device 1100, or communicates with any device (e.g., a network card, a modem, etc.) that enables the electronic device 1100 to communicate with one or more other electronic devices. Such communication may be performed via an input / output (I / O) interface (not shown).

According to example implementations of the disclosure, there is provided a computer-readable storage medium having computer-executable instructions stored thereon, wherein the computer-executable instructions are executed by a processor to implement the method described above. According to example implementations of the disclosure, a computer program product is further provided, the computer program product being tangibly stored on a non-transitory computer-readable medium and including computer-executable instructions, and the computer-executable instructions being executed by the processor to implement the method described above.

Aspects of the disclosure are described herein with reference to flowcharts and / or block diagrams of a method, an apparatus, a device, and a computer program product implemented in accordance with the disclosure. It should be understood that each block of the flowchart and / or block diagram, and combinations of blocks in the flowchart(s) and / or block diagram(s), may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions / acts specified in one or more blocks in the flowchart(s) and / or block diagram(s). These computer-readable program instructions may also be stored in a computer-readable storage medium that cause the computer, programmable data processing apparatus, and / or other devices to function in a particular manner, such that the computer-readable medium storing instructions includes an article of manufacture including instructions to implement aspects of the functions / acts specified in one or more blocks in the flowchart(s) and / or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on the computer, other programmable data processing apparatus, or other apparatus implement the functions / acts specified in one or more blocks in the flowchart(s) and / or block diagram(s).

The flowchart and block diagrams in the figures show an architecture, functionality, and operation that may be possibly implemented by a system, a method, and a computer program product according to various implementations of the disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagram(s) and / or flowchart(s), as well as combinations of blocks in the block diagram(s) and / or flowchart(s), may be implemented with a dedicated hardware-based system that performs the specified functions or actions, or may be implemented in a combination of dedicated hardware and computer instructions.

Various implementations of the disclosure have been described above, which are illustrative, not exhaustive, and are not limited to the implementations disclosed. Many modifications and variations will be apparent to those of ordinary skill in the art without departing from the scope and spirit of various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method of interaction, comprising:
presenting an input control in a first user interface;
presenting, in the first user interface, a pattern received via the input control, the pattern comprising one or more lines;
obtaining a first image based on the pattern, the first image visually at least partially matching with the pattern;
presenting the first image; and
presenting, in response to a predetermined condition being satisfied, at least a portion of a second image captured in real time together with at least a portion of the first image.

2. The method of claim 1, further comprising:
replaying a drawing process of the pattern.

3. The method of claim 2, wherein the drawing process is replayed in response to a trigger operation for content capture being detected after obtaining the first image, and the at least a portion of the second image is presented with the at least a portion of the first image in response to an end of the replay.

4. The method of claim 1, wherein the input control comprises a drawing board for pattern drawing, and the first user interface further presents a current image that is currently captured, and the method further comprises:
receiving the pattern drawn by a user via the drawing board while presenting the current image.

5. The method of claim 4, wherein the drawing board is at least partially transparent and superimposed over the current image.

6. The method of claim 4, further comprising:
playing a prompt animation on the drawing board to indicate to the user that the drawing board is configured for pattern drawing.

7. The method of claim 1, further comprising:
generating, in response to a trigger operation for content capture, media content based on the first image and the second image.

8. The method of claim 1, further comprising:
presenting the pattern with the first image, the pattern being superimposed over the first image and having a size smaller than that of the first image.

9. The method of claim 1, wherein presenting the first image comprises:
switching, in response to obtaining the first image, from the first user interface with the pattern as an attention focus to a second user interface with the first image as an attention focus.

10. The method of claim 1, wherein the first image is generated using an image generation model.

11. The method of claim 10, wherein the first image is generated using the image generation model by:
determining a target label for the pattern from a plurality of predefined labels by image recognition on the pattern, the target label describing an object recognized in the pattern;
determining a target image generation model of a plurality of image generation models corresponding to the target label, the plurality of image generation models respectively corresponding to a plurality of styles, and each of the image generation models being configured to generate an image of a corresponding style; and
generating the first image by using the target image generation model based on the pattern.

12. The method of claim 11, wherein determining the target image generation model comprises:
obtaining a label-model mapping between the plurality of predefined labels and the plurality of image generation models, the label-model mapping comprising respective entries for the plurality of predefined labels, and each entry indicating a candidate image generation model of the plurality of image generation models corresponding to a respective predefined label;
determining at least one candidate image generation model corresponding to the target label based on an entry for the target label in the label-model mapping; and
determining the target image generation model from the at least one candidate image generation model.

13. The method of claim 11, wherein generating the first image comprises:
obtaining target parameter information for the target image generation model predetermined for the target label, the target parameter information being different from default parameter information of the target image generation model;
providing the pattern and the target parameter information to the target image generation model; and
obtaining the first image from the target image generation model.

14. The method of claim 13, wherein the target parameter information comprises at least one of:
a text corresponding to the target label for assisting image generation,
content that is prohibited from being generated by the target image generation model,
an intensity of a generated image stylized according to a style corresponding to the target image generation model,
a degree of influence of the pattern on the first image during image generation,
a number of times a noise image is sampled during the image generation, or
a sampler applied to the noise image during image generation.

15. The method of claim **11,** wherein determining the target label comprises:
generating an initial label describing the object by image recognition on the pattern; and
determining the target label from the plurality of predefined labels based on the initial label, wherein the target label is semantically matched with the initial label, or the object described by the target label is visually matched with an object described by the initial label.

16. An apparatus for interaction, comprising:
a control presenting module configured to present an input control in a first user interface;
a pattern presenting module configured to present, in the first user interface, a pattern received via the input control, the pattern comprising one or more lines;
an image obtaining module configured to obtain a first image based on the pattern, the first image visually at least partially matching with the pattern;
a first image presenting module configured to present the first image; and
a second image presenting module configured to present, in response to a predetermined condition being satisfied, at least a portion of a second image captured in real time together with at least a portion of the first image.

17. An electronic device, comprising:
at least one processing unit; and
at least one memory coupled to the at least one processing unit and storing instructions for execution by the at least one processing unit, the instructions, when executed by the at least one processing unit, causing the electronic device to perform the method of any of claims 1 to 15.

18. A computer-readable storage medium having stored thereon a computer program executable by a processor to implement the method of any of claims 1 to 15.
